# EUROPÄISCHE PATENTANMELDUNG

(11) **EP 3 125 190 A1**
(43) Veröffentlichungstag der Anmeldung: **01.02.2017**
(21) Anmeldenummer: 16182172.3
(22) Anmeldetag: 01.08.2016
(51) Int. Cl.: G06Q 50/28, G06Q 10/08

(54) **LASTKRAFTWAGEN UND HUBLADEBÜHNE FÜR EINEN LASTKRAFTWAGEN, VERFAHREN ZUM VERLADEN VON GÜTERN**

(30) Priorität: 31.07.2015 DE 102015214621
(71) Anmelder: Bär Management- und Beteiligungsgesellschaft mbH, 74078 Heilbronn (DE)
(72) Erfinder: Bär,Tobias, 74078 Heilbronn (DE); Förch, Peter, 67435 Neustadt and der Weinstraße (DE)
(74) Vertreter: DREISS Patentanwälte PartG mbB

(57) **Zusammenfassung**

Die Erfindung betrifft einen Lastkraftwagen (1) oder Hubladebühne (30) für einen Lastkraftwagen (1), sowie ein Verfahren zum Verladen von Gütern, wobei an dem Lastkraftwagen (1) oder an der Hubladebühne (30) für den Lastkraftwagen (1) mindestens eine Leseeinrichtung (2, 10) angeordnet ist, wobei die mindestens eine Leseeinrichtung (2, 10) so am Lastkraftwagen (1) beziehungsweise der Hubladebühne (30) angeordnet ist, dass beim Verladen eines Guts (4, 5) eine Identifizierung des Guts (4, 5) mittels eines von der Leseeinrichtung (2, 10) empfangbaren elektromagnetischen Signals aus mindestens einem am Gut (4, 5) angebrachten Transponder (6) auslesbar ist.

## Beschreibung

Zum Transport von Gütern über Land werden unter anderem Lastkraftwagen eingesetzt. Dazu werden Güter wie Waren oder Warentransportbehälter unter anderem mittels Hubladebühnen verladen. Das Verladen bezeichnet das Umladen, Aufladen, Abladen oder Entladen von Gütern auf beziehungsweise von Transportmitteln, wie Lastkraftwagen. Zur Verfolgung von Waren oder Warentransportbehältern werden Barcodes oder Radio Frequenz Identifikation Transponder verwendet, die an den Waren oder Warentransportbehältern angebracht werden. Zum Auslesen von Daten, beispielsweise einer Identifikation der Ware oder des Warentransportbehälters, aus den Transpondern, werden spezielle Lesegeräte, insbesondere Radio Frequenz Identifikationslesegeräte eingesetzt. Diese werden an den Ladeschleusen der jeweiligen Lager oder Logistikzentren stationär verbaut. Dadurch ist eine Verfolgung der Waren, die an einem Lager oder Logistikzentrum aus einem Lastkraftwagen ausgeladen oder dort in einen Lastkraftwagen geladen werden möglich.

Die Verfolgung beschränkt sich dabei auf die stationären Punkte. Eine Verfolgung der Waren oder Warentransportbehälter außerhalb der Lager oder Logistikzentren ist dadurch nicht möglich.

Zur Verfolgung der Waren oder Warentransportbehälter außerhalb der Lager oder Logistikzentren werden beispielsweise tragbare Barcodescanner verwendet. Ein Mitarbeiter scannt manuell den Barcode von Waren oder Warentransportbehältern am Entlade- beziehungsweise Beladeort. Dies ist für größere Warenmengen unpraktisch und fehleranfällig.

Der vorliegenden Erfindung liegt die Aufgabe zugrunde, diesem Problem zu begegnen.

Diese Aufgabe wird erfindungsgemäß gelöst durch eine Vorrichtung der gattungsgemäßen Art, die dadurch gekennzeichnet ist, dass an einem Lastkraftwagen oder an einer Hubladebühne für einen Lastkraftwagen mindestens eine Leseeinrichtung angeordnet ist, wobei die mindestens eine Leseeinrichtung so am Lastkraftwagen beziehungsweise der Hubladebühne angeordnet ist, dass beim Verladen eines Guts eine Identifizierung des Guts mittels eines von der Leseeinrichtung empfangbaren elektromagnetischen Signals aus mindestens einem am Gut angebrachten Transponder auslesbar sind.

Ein Verfahren, das diese Aufgabe löst, ist ebenfalls Gegenstand der Erfindung.

Vorteilhafterweise ist die mindestens eine Leseeinrichtung ausgebildet, zur Verfolgung des Guts, Richtungsinformation abhängig von mindestens zwei, vorzugsweise vier, ausgelesenen Identifizierungen desselben Guts zu erkennen, insbesondere ein Aufladen oder ein Entladen der Ware.

Vorteilhafterweise ist die mindestens einen Leseeinrichtung ausgebildet, die mindestens zwei, vorzugsweise vier, Identifizierungen desselben Guts zu unterschiedlichen Zeitpunkten auszulesen, insbesondere mit einem Abstand von bis zu 1 Minute, bis zu 30 Sekunden vorzugsweise bis zu 5 Sekunden voneinander. Dadurch ist die Richtungsinformation abhängig von Information über die Position des Transponders, der die jeweilige Identifizierung zu dem jeweiligen Zeitpunkt sendet, bestimmbar.

Vorteilhafterweise sind mindestens zwei miteinander in Kommunikation stehende Leseeinrichtungen vorgesehen sind, die ausgebildet sind, eine Identifizierungen desselben Guts auszulesen. Dadurch ist die Richtungsinformation abhängig von den Zeitpunkten der jeweils ausgelesenen Identifizierung desselben Guts bestimmbar.

Vorteilhafterweise ist die Hubladebühne an der Ladeöffnung angeordnet und die mindestens eine Leseeinrichtung ist an einer der Ladeöffnung zugewandten Tragseite der Hubladbühne angeordnet.

Vorteilhafterweise ist die mindestens eine Leseeinrichtung ausgebildet einer ausgelesenen Identifizierung Information zum Zeitpunkt und/oder Ort des Auslesens zuzuordnen, insbesondere eine Uhrzeit und/oder GPS Koordinaten.

Vorteilhafterweise ist an der mindestens einen Leseeinrichtung auf der Ladeöffnung abgewandter Seite eine Abschirmeinrichtung angeordnet, die die Ausbreitung des elektromagnetischen Signals dämpft. Dadurch wird ein Fehlerkennen des Auf-/oder Entladens von Waren, die nahe des Lastkraftwagens aufbewahrt werden, vermieden.

Vorteilhafterweise bildet zumindest ein Teil der Hubladebühne zumindest einen Teil der Abschirmeinrichtung.

Vorteilhafterweise bildet zumindest ein Teil des Aufbaus des Lastkraftwagens zumindest einen Teil der Abschirmeinrichtung.

Weitere Vorteile, Einzelheiten und Merkmale der erfindungsgemäßen Vorrichtung ergeben sich aus den beigefügten Patentansprüchen und aus der zeichnerischen Darstellung und nachfolgenden Beschreibung vorteilhafter Ausführungsformen der Erfindung. In der Zeichnung zeigt:
- Figur 1: eine erste Ansicht einer ersten Ausführungsform der erfindungsgemäßen Vorrichtung bei der eine Leseeinrichtung an einem Aufbau eines Lastkraftwagens angeordnet ist;
- Figur 2: eine zweite Ansicht einer ersten Ausführungsform Der erfindungsgemäßen Vorrichtung bei der eine Leseeinrichtung an einem Aufbau eines Lastkraftwagens angeordnet ist;
- Figur 3: eine erste Ansicht einer zweiten Ausführungsform der erfindungsgemäßen Vorrichtung bei der eine Leseeinrichtung an einer Hubladebühne für einen Lastkraftwagen angeordnet ist;
- Figur 4: eine zweite Ansicht einer zweiten Ausführungsform der erfindungsgemäßen Vorrichtung bei der eine Leseeinrichtung an einer Hubladebühne für einen Lastkraftwagen angeordnet ist;
- Figur 5: eine dritte Ausführungsform der erfindungsgemäßen Vorrichtung bei der zwei Leseeinrichtungen an einem Aufbau eines Lastkraftwagens angeordnet sind;
- Figur 6: eine vierte Ausführungsform der erfindungsgemäßen Vorrichtung bei der zwei Leseeinrichtungen an einer Hubladebühne für einen Lastkraftwagen angeordnet sind.

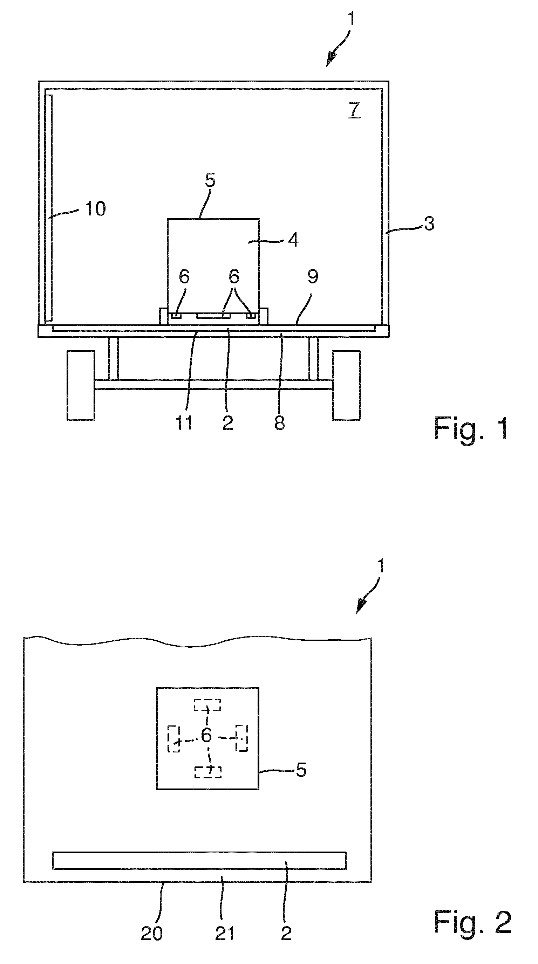

Figur 1 zeigt schematisch einen Teil eines Lastkraftwagens 1 bei dem eine Leseeinrichtung 2 an einem Aufbau 3 des Lastkraftwagens 1 angeordnet ist.

Die Leseeinrichtung 2 ist im Beispiel eine Radio Frequenz Identifikation (RFID) Leseeinrichtung. Die Leseeinrichtung 2 ist dazu ausgebildet eine Identifizierung eines Gutes, insbesondere einer Ware 4 oder eines Warentransportbehälters 5, aus einem mit dem Gut verbundenen Transponder 6 auszulesen. Der Transponder 6 ist vorzugsweise ein RFID Transponder.

Dazu erzeugt die Leseeinrichtung 2 ein elektromagnetisches Signal, insbesondere eine RFID Funksignal. Das RFID Funksignal ist beispielsweise ein elektromagnetisches Wechselfeld mit 125 kHz, 134 kHz oder 13,56 MHz. Das RFID-Funksignal kann auch Frequenzen im Bereich der Langwelle bei 250 kHz, 375 kHz, 500 kHz, 625 kHz, 750 kHz, 875 kHz, der Kurzwelle bei 13,56 MHz oder der UHF bei 865-869 MHz, 950 MHz oder der SHF bei 2,45 GHz und 5,8 GHz verwenden. Anstelle von RFID-Technologie kann auch Near Field Communication, bekannt als NFC verwendet werden. Das Signal kann auch vom Transponder 6 erzeugt werden.
Daten, die auf dem Transponder 6 dazu vorgesehen sind, können durch das Signal ausgelesen werden. Im Beispiel wird die Identifizierung des RFID Transponders als Identifizierung der Ware 4 oder des Warentransportbehälters 5 verwendet. Der Transponder 6 ist im Beispiel bodenseitig an dem Warentransportbehälter 5 angeordnet. Der Transponder 6 kann alternativ auch an anderen Stellen des Warentransportbehälters 5 oder an der Ware 4 selbst angeordnet sein.

Wie in Figur 1 dargestellt ist die Leseeinrichtung 2 an dem Lastkraftwagen 1, benachbart zu einer Ladeöffnung 7 des Lastkraftwagens 1 angeordnet.

Vorzugsweise ist die Leseeinrichtung 2 in einem die Ladeöffnung 7 begrenzenden Randbereich 8 des Aufbaus 3 auf einer der Ladeöffnung 7 zugewandten Tragseite des Aufbaus 3 angeordnet.

Im Beispiel erstreckt sich die Leseeinrichtung 2 entlang der Ladekante der Ladeöffnung 7. Anstelle einer Leseeinrichtung 2 können auch mehrere Leseeinrichtungen 2 vorgesehen sein, die sich entlang der Ladekante der Ladeöffnung 7 erstrecken. Zudem kann eine Leseeinrichtung 2 mittig bezüglich der Ladeöffnung 7 angeordnet sein. Die Leseeinrichtung 2 kann sich über die gesamte Länge oder nicht über die gesamte Länge der Ladekante der Ladeöffnung 7 erstrecken.

Im Beispiel ist die Leseeinrichtung 2 eben mit dem Boden 9 der Tragseite der Ladefläche des Aufbaus 3 abschließend angeordnet. Das bedeutet, dass die Leseeinrichtung 2 eben mit einem der Ladeöffnung 7 zugewandten Abschnitt des Aufbaus 3 abschließt. Dadurch wird eine Schwelle vermieden, die beim Verladen, beispielsweise beim Auf- oder Entladen von Waren 4 oder Warentransportbehältern 5 stören kann.

Alternativ oder zusätzlich kann eine oder können mehrere weitere Leseeinrichtungen 10 vorgesehen sein. Diese kann oder diese können wie für die Leseeinrichtung 2 beschrieben angeordnet sein. Im Beispiel ist eine Leseeinrichtung 10 an der Seite des Aufbaus 3 benachbart zur Ladeöffnung 7 angeordnet. Die Leseeinrichtung 10 erstreckt sich im Beispiel im Wesentlichen über die Höhe der Ladeöffnung 7. Dadurch können Signale von Transpondern 6, die an anderen Positionen der Ware 4 oder des Warentransportbehälters 5, beispielsweise an der Seite, angeordnet sind gut gelesen werden.

Die Leseeinrichtungen 10 können mit dem Abschnitt des Aufbaus 3 abschließend oder von einem der Ladeöffnung 7 zugewandten Abschnitt des Aufbaus 3 aus, in Richtung der Ladeöffnung 7 abstehend angeordnet sein. Letzteres ermöglicht beispielsweise eine insgesamt dünnere Gestaltung des Rahmens des Aufbaus 3.

Die Leseeinrichtung 10 ist, sofern im Folgenden nichts Abweichendes beschrieben wird, wie die Leseeinrichtung 2 ausgebildet und angeordnet.

Die Leseeinrichtung 2 ist im Beispiel ausgebildet einer ausgelesenen Identifizierung Information zum Zeitpunkt und/oder Ort des Auslesens, insbesondere eine Uhrzeit und/oder GPS Koordinaten, zuzuordnen. Dazu ist die Leseeinrichtung 2 im Beispiel über eine Kommunikationsschnittstelle (nicht dargestellt) mit einem oder mehreren ebenfalls nicht dargestellten Steuergeräten des Lastkraftwagens 1 verbindbar. Die Kommunikationsschnittstelle ist ausgebildet Information über die Uhrzeit und/oder die Position der Leseeinrichtung 2, beispielsweise über einen Datenbus, insbesondere einen CAN oder Flexray Bus zu empfangen. Alternativ oder zusätzlich kann eine Uhr oder ein GPS Empfänger auch in der Leseeinrichtung 2 angeordnet sein. Zur Verbesserung der Genauigkeit der Positionserkennung kann eine Schnittstelle zu einem Fahrzeugnavigationsgerät vorgesehen sein. Diese liefert beispielsweise aus Fahrzeugsensoren oder Straßenkarten erzeugte Positionsangaben des Lastkraftwagens. Dadurch kann unabhängig vom Empfang von gültigen GPS Signalen die Position bestimmt werden.

Die Leseeinrichtung 2 umfasst im Beispiel einen (nicht dargestellten) Speicher und ist ausgebildet auf dem Speicher Information über die ausgelesene Identifizierung, vorzugsweise mit der den Lesezeitpunkt charakterisierenden Uhrzeit und/oder der die Position der Leseeinrichtung 2 zum Lesezeitpunkt charakterisierenden Information zu speichern. Alternativ oder zusätzlich kann der Speicher auch auf dem Lastkraftwagen 1 angeordnet sein.

Die Leseeinrichtung 2 ist im Beispiel zudem dazu ausgebildet die Information über die ausgelesene Identifizierung, die Uhrzeit und/oder die Position der Leseeinrichtung 2 mittels eines in der Leseeinrichtung 2 angeordneten Senders oder über einen im Lastkraftwagen 1 angeordneten, mit der Leseeinrichtung 2 dazu verbundenen Sender, insbesondere über ein Funknetzwerk, vorzugsweise ein Mobilfunknetzwerk beispielsweise nach LTE oder UMTS Standard, zu senden. Sofern der Sender im Lastkraftwagen 1 angeordnet ist, ist beispielsweise die Kommunikationsschnittstelle ausgebildet Information über die Uhrzeit und/oder die Position der Leseeinrichtung 2, beispielsweise über den Datenbus, insbesondere den CAN oder Flexray Bus an den Sender zum Senden zu übertragen.

Die Leseeinrichtung 2 ist im Beispiel in einem Gehäuse 11 angeordnet. Das Gehäuse 11 weist zumindest auf seiner der Ladeöffnung 7 zugewandten Seite zumindest teilweise einen Bereich auf, der für das elektromagnetische Signal zumindest teilweise durchlässig ist. Das bedeutet, dass die mindestens eine Leseeinrichtung 2 auf der Ladeöffnung 7 zugewandter Seite eine für das elektromagnetische Signal zumindest teilweise durchlässige Abdeckung aufweist.

Vorzugsweise ist an der Leseeinrichtung 2, auf einer der Ladeöffnung 7 abgewandten Seite, eine Abschirmeinrichtung angeordnet, die die Ausbreitung des elektromagnetischen Signals dämpft.

Die Dämpfung ist dabei vorzugsweise so stark, dass in dem Bereich keine elektromagnetischen Wellen austreten. Beispielsweise weist das Gehäuse 11 vorzugsweise an der Ladeöffnung 7 abgewandter Seite des Gehäuses 11 einen Bereich auf, der die Ausbreitung von elektromagnetischen Wellen dämpft.

Vorzugsweise bildet der Aufbau 3 zumindest einen Teil der Abschirmeinrichtung. Beispielsweise ist dazu die Leseeinrichtung 2 an einer der Ladeöffnung 7 abgewandten Seite von einem die Ausbreitung elektromagnetischer Wellen dämpfenden oder verhindernden Abschnitt des Aufbaus 3 umgeben.

Im Beispiel ist der Rahmen 8 zumindest im Bereich der Leseeinrichtung 2 zumindest teilweise metallisch und bildet somit die Abschirmeinrichtung.

Vorzugsweise ist die Leseeinrichtung 2 wie in Figur 2 dargestellt von einer Stirnseite 20 der Ladeöffnung 7 beabstandet angeordnet. Die Stirnseite 20 bildet im Beispiel die Ladekante des Lastkraftwagens 1. Dadurch bildet ein zwischen Leseeinrichtung 2 und Stirnseite 20 verbleibender Steg 21 eine die Leseeinrichtung 2 in Richtung Ladekante abschirmende Abschirmeinrichtung.

Durch die Abschirmeinrichtung wird eine Fehlerkennung des Auf- oder Entladens von Waren 4 oder Warentransportbehältern 5 vermieden.

Die Leseeinrichtung 2 ist im Beispiel ausgebildet mindesten zwei Identifizierung zur Verfolgung der Ware 4 oder des Warentransportbehälters 5 beim Auf- oder Entladen der Ware 4 oder des Warentransportbehälters 5 aus zwei unterschiedlichen Transpondern 6 zu lesen, die derselben Ware 4 oder demselben Warentransportbehälter 5 zugeordnet sind. Im Beispiel sind wie in Figur 2 dargestellt, vier Transponder 6 an dem Warentransportbehälter 5, vorzugsweise bodenseitig angeordnet. Die Zuordnung erfolgt beispielsweise durch vier Identifikationen, die dieselbe Ware 4 oder denselben Warentransportbehälter 5 identifizieren, sich jedoch durch die Identifikation des Transponders 6 unterscheiden.

Die Transponder 6 sind dabei im Beispiel voneinander beabstandet an der Warenverpackung 5 angeordnet. Durch Signalstärkemessung, Zeitunterschiede der Lesezeitpunkte, Laufzeitmessung oder Messung der Phasenverschiebung der elektromagnetischen Wellen wird beispielsweise die Richtung, d.h. Auf- oder Entladen erkannt.

Vorteilhafterweise werden die Identifizierungen von zwei an einander gegenüberliegenden Seiten der Ware 4 oder des Warentransportbehälters 5 angeordneten, Transpondern 6 zum Erkennen des Aufladens oder des Entladens verwendet.

Besonders vorteilhaft ist es, wenn an einer Ware 4 oder einem Warentransportbehälter 5 mit einer in Wesentlichen rechteckförmigen Seite, wie im Beispiel in Figur 2 dargestellt, mindestens vier Transponder 6 in einer Ebene angeordnet sind, die im Wesentlichen parallel zur Ladefläche des Lastkraftwagens 1 verläuft, wenn die Ware 4 oder der Warentransportbehälter 5 sich auf der Ladefläche des Lastkraftwagens 1 befindet.

Besonders vorteilhaft ist, insbesondere bei einer rechteckigen Gestaltung der Ware 4 oder des Warentransportbehälters 5, eine Anbringung von je einem der vier Transpondern 6, insbesondere mittig, auf je einer der Seiten des Rechtecks.

Eine rechteckige Anordnung der Transponder 6 kann auch bei einer anderen Form der Seite oder an einer anderen Seite der Ware 4 oder des Warentransportbehälters 5 verwendet werden. Die Orientierung der Anordnung in der Ebene ist dabei beliebig.

Die in dieser rechteckigen Anordnung einander gegenüberliegenden Transponder 6 sind dabei beispielsweise durch einen gemeinsamen Teil ihrer Identifikation als solche erkennbar.

Dadurch ist die Erkennung des Auf- oder Entladens unabhängig von der Orientierung der Ware 4 oder des Warentransportbehälters 5 bezüglich des Lastkraftwagens 1 zuverlässig möglich.

Die Leseeinrichtung 2 ist im Beispiel ausgebildet zur Verfolgung der Ware 4 oder des Warentransportbehälters 5 eine Richtungsinformation abhängig von den vier ausgelesenen Identifizierungen derselben Ware 4 oder desselben Warentransportbehälters 5, insbesondere ein Aufladen oder ein Entladen der Ware 4 oder des Warentransportbehälters 5, zu erkennen. Das Aufladen oder Entladen wird beispielsweise aus Zeitunterschieden erkennbar, die zwischen dem Lesezeitpunkt der beiden von gegenüberliegenden Transpondern 6 stammenden Identifikationen liegen. Zusätzlich kann vorgesehen sein, das Aufladen daran zu erkennen, dass die Identifikation der Ware 4 oder des Warentransportbehälters 5 bisher unbekannt ist. Ein Entladen kann optional dadurch erkannt werden, dass eine zuvor bereits schon einmal ausgelesene Identifikation erneut ausgelesen wird. Dazu kann jede Identifikation jeder Ware 4 oder jedes Warentransportbehälters 5, die ausgelesen wurde, in dem Speicher gespeichert werden. Diese Identifikation wird vorzugsweise beim Erkennen des Entladens der zugeordneten Ware 4 oder des zugeordneten Warentransportbehälters 5 gelöscht.

Die Leseeinrichtung 2 erzeugt beispielsweise zum Auslesen der vier Identifizierungen zu unterschiedlichen Zeitpunkten ein entsprechendes elektromagnetisches Signal. Die Zeitpunkte haben beispielsweise einen Abstand von bis zu 1 Minute, bis zu 30 Sekunden vorzugsweise bis zu 5 Sekunden voneinander.

Zur Erkennung des Auf- oder Entladens können auch mehr oder weniger Identifizierungen von mehr oder weniger als vier Transpondern 6 verwendet werden. Beispielsweise reichen zwei Identifizierungen von zwei Transpondern aus, wenn die Ware 4 oder der Warentransportbehälter 5, beispielsweise aufgrund ihrer Außenmaße oder aufgrund konstruktiver Beschränkungen nur in einer vorgegebenen Orientierung Auf- oder Entladen werden kann. Es können auch drei oder mehr als vier Transponder 6 angebracht sein oder drei oder mehr als vier Identifikationen verwendet werden.

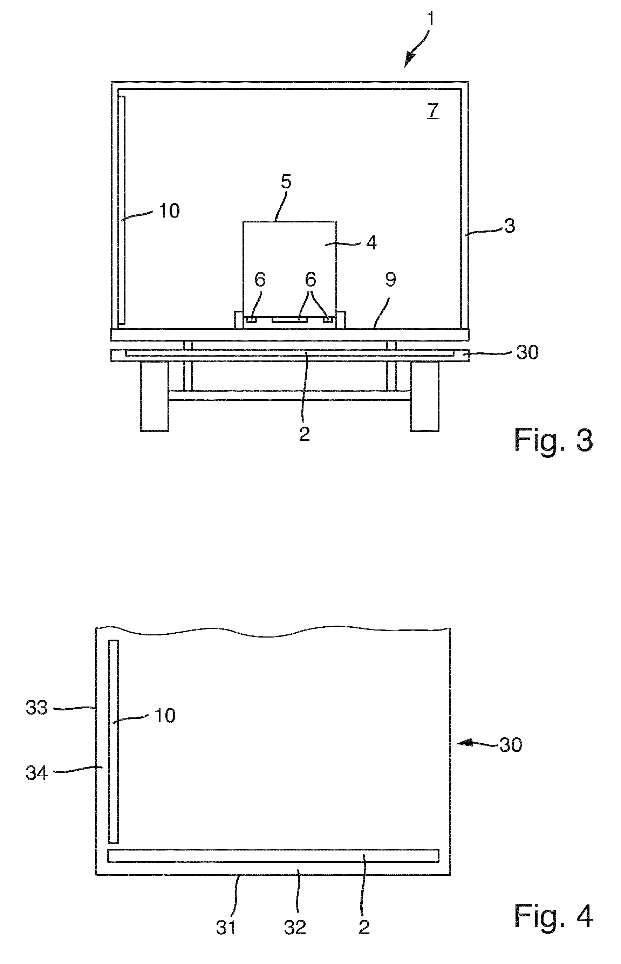

Figur 3 stellt eine erste Ansicht einer zweiten Ausführungsform der erfindungsgemäßen Vorrichtung dar, bei der die Leseeinrichtung 2 an einer Hubladebühne 30 für einen Lastkraftwagen angeordnet ist. Bevorzugt ist die Hubladebühne 30 fest am Lastkraftwagen angebracht.

Figur 4 stellt eine zweite Ansicht der zweiten Ausführungsform der erfindungsgemäßen Vorrichtung dar, bei der die Leseeinrichtung 2 an der Hubladebühne 30 angeordnet ist.

Im Folgenden werden für Elemente, die mit den Elementen übereinstimmen, die in der ersten Ausführungsform bereits in Figuren 1 und 2 beschrieben wurden dieselben Bezugszeichen verwendet.

Im Unterschied zur ersten Ausführungsform, ist an der Ladeöffnung 7 eine Hubladebühne 30 angeordnet. Die Leseeinrichtung 2 ist bevorzugt an einer Tragseite der Hubladbühne 30 der Hubladebühne 30 angeordnet, die in einer Arbeitsposition der Hubladebühne 30 der Ladeöffnung 7 zugewandt ist.

Im Beispiel ist die Leseeinrichtung 2 in einem Randbereich der Hubladebühne 30, vorzugsweise an einer Stirnseite 31 der Hubladebühne, insbesondere mittig angeordnet. Die Leseeinrichtung 2 erstreckt sich im Beispiel im Wesentlichen über die gesamte Stirnseite 31. Anstelle einer Leseeinrichtung 2 können auch mehrere Leseeinrichtungen 2 vorgesehen sein, die sich, voneinander beabstandet, im Wesentlichen parallel entlang der Stirnseite 31 erstrecken. Zudem kann eine Leseeinrichtung 2 auch mittig bezüglich der Stirnseite 31 angeordnet sein. Die Leseeinrichtung 2 kann sich im Wesentlichen über die gesamte Länge oder nicht über die gesamte Länge der Ladekante der Stirnseite 31 erstrecken. Die Leseeinrichtung 2 kann auch mittig, d.h. im Zentrum der Hubladebühne 30 oder in dem der Stirnseite 21 des Aufbaus 7 zugewandten Randbereich der Hubladebühne 30 angeordnet sein.

Optional oder alternativ kann eine derartige Leseeinrichtung auch an einer oder mehreren Seiten der Hubladebühne 30 angeordnet sein. In dem in Figur 4 dargestellten Beispiel ist eine Leseeinrichtung 2 an der Stirnseite 31 und eine Leseeinrichtung 10 an einer Seite 33 der Hubladebühne 30 angeordnet. Bei einer Hubladebühne, die zum Auf- oder Entladen bezüglich des Lastkraftwagens 1 in einer seitlichen Abrollrichtung ausgebildet ist, wird so auch ein seitlicher Auf- oder Entladevorgang zuverlässig erkannt.

Die Leseeinrichtung 10 ist, sofern im Folgenden nichts Abweichendes beschrieben wird, wie die Leseeinrichtung 2 ausgebildet und angeordnet.

Die Stirnseite 31 oder die Seite 33 bildet im Beispiel die Ladekante der Hubladebühne 30. Dadurch bildet ein zwischen Leseeinrichtung 2 und Stirnseite 31 verbleibender Steg 32 beziehungsweise ein zwischen der Leseeinrichtung 10 und der Seite 33 verbleibender Steg 34 eine die Leseeinrichtung 2 beziehungsweise die Leseeinrichtung 10 in Richtung Ladekante der Hubladebühne 30 abschirmende Abschirmeinrichtung.

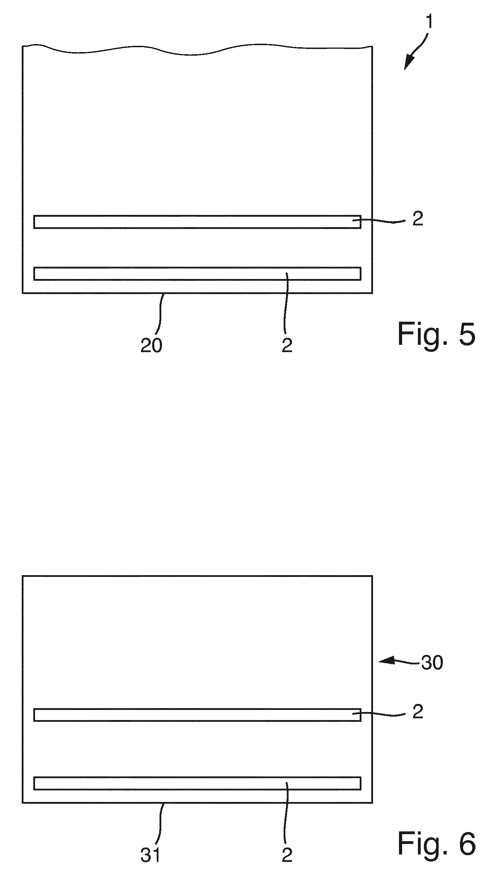

Vorteilhafterweise sind mehrere Leseeinrichtungen 2, 10 vorgesehen. Dies ist für eine dritte und vierte Ausführungsform der erfindungsgemäßen Vorrichtung in Figur 5 beziehungsweise Figur 6 anhand zweier, voneinander beabstandet, im Wesentlichen parallel zueinander verlaufender Leseeinrichtung 2 dargestellt. Mehrere Leseeinrichtungen 10 können ebenfalls derart bezüglich der Seite 33 angeordnet sein.

Vorzugsweise schließt die Leseeinrichtung 2 eben mit der Tragseite der Hubladebühne 30 ab.

Die Leseeinrichtung 2 kann auch von der Tragseite der Hubladebühne 30, vorzugsweise in Richtung Ladeöffnung 7 abstehend, angeordnet sein.

Vorzugsweise ist die Leseeinrichtung 2 ausgebildet, die mindesten eine Identifizierung zur Verfolgung der Ware 4 beim Bewegen oder Fahren der Ware 4 oder des Warentransportbehälters 5 von der Hubladebühne 30 auszulesen. Die Leseeinrichtung 2 kann auch ausgebildet sein, die Identifizierung beim Bewegen oder Fahren der Ware 4 oder des Warentransportbehälters 5 auf die Hubladebühne 30 oder auf der Hubladebühne 30 auszulesen.

Vorzugsweise bildet die Hubladebühne 30 zumindest einen Teil der Abschirmeinrichtung. Beispielsweise ist die Leseeinrichtung 2 dazu an einer der Tragfläche der Hubladebühne 30 abgewandten Seite zumindest teilweise von einem, die Ausbreitung elektromagnetischer Wellen dämpfenden oder verhindernden, Abschnitt der Hubladebühne 30 umgeben.

Im Beispiel ist die Hubladebühne 30 zumindest im Bereich der Leseeinrichtung 2 zumindest teilweise metallisch und bildet somit die Abschirmeinrichtung.

Falls eine Leseeinrichtung 10 vorgesehen ist, bildet die Hubladebühne 30 vorzugsweise in dem Bereich in dem die Leseeinrichtung 10 angeordnet ist ebenfalls diese Abschirmeinrichtung.

In Figur 5 sind zwei Leseeinrichtungen 2 an dem Aufbau 7 des Lastkraftwagens 1, vorzugsweise auf oder in der Tragseite, d.h. der Ladefläche, angeordnet. Dabei sind die zwei Leseeinrichtungen 2 vorzugsweise in unterschiedlichem Abstand von der Stirnseite 20 des Aufbaus 7 angeordnet.

In Figur 6 sind die zwei Leseeinrichtungen 2 an der Hubladebühne 30, vorzugsweise auf oder in der Tragseite, angeordnet. Dabei sind die zwei Leseeinrichtungen 2 vorzugsweise in unterschiedlichem Abstand von der Stirnseite 32 der Hubladebühne, im Wesentlichen zueinander parallel verlaufend angeordnet.

Die zwei Leseeinrichtungen 2 sind in der dritten oder vierten Ausführungsform beispielsweise über den Datenbus verbunden und tauschen Information über die von der jeweiligen Leseeinrichtung 2 ausgelesene Identifizierung aus. Alternativ kann eine erste der Leseeinrichtungen 2 als Antennenelement und eine zweite der Leseeinrichtungen 2 als Auswerteeinrichtung mit Antenne ausgebildet sein. Das Antennenelement ist dann an die Auswerteeinrichtung angeschlossen.

Diese Vorrichtung zur Warenverfolgung ist ausgebildet mindestens zwei, vorzugsweise vier ausgelesenen Identifizierungen derselben Ware 4 oder desselben Warentransportbehälters 5 von unterschiedlichen Transpondern 6 auszulesen.

Ein Verfahren zur Warenverfolgung, bei dem mindestens eine Identifizierung einer Ware 4 oder eines Warentransportbehälters 5 aus einem mit der Ware 4 oder dem Warentransportbehälter 5 verbundenen Transponder 6 mittels eines von der Leseeinrichtung 2 erzeugten elektromagnetischen Signals auslesbar ist, wird im Folgenden beschrieben. Das Signal kann auch von dem Transponder 6 erzeugt werden.

Die mindestens eine Leseeinrichtung 2 ist dabei an dem Lastkraftwagen 1 oder an der Hubladebühne 30 für den Lastkraftwagen 30, beispielsweise wie zuvor beschrieben, benachbart zur Ladeöffnung 7, angeordnet.

Das Verfahren zur Warenverfolgung beginnt beispielsweise beim Öffnen der Ladeöffnung 7, oder bei Betätigung der Hubladebühne 30.

In einem ersten Schritt wird Mindesten eine Identifizierung zur Verfolgung der Ware 4 oder des Warentransportbehälters 5 beim Verladen, d.h. beim Auf- oder Entladen de Ware 4 oder des Warentransportbehälters 5 aus dem Transponder 6 ausgelesen. Der Auf- oder Entladevorgang wird dazu wie im Folgenden beschrieben erkannt.

Zum Auslesen erzeugt die mindestens eine Leseeinrichtung 2, beispielsweise während die Ladeöffnung 7 des Lastkraftwagens 1 geöffnet ist, oder die Hubladebühne 30 in einer Arbeitsposition ist, mindestens zu einem Zeitpunkt ein elektromagnetisches Signal zum Auslesen der mindestens einen Identifizierung aus dem Transponder 6.

Beim Empfang einer Identifizierung einer Ware 4 oder des Warentransportbehälters 5 in Erwiderung auf das erzeugte elektromagnetische Wechselfeld, erzeugt die Leseeinrichtung 2 abhängig von der empfangenen Identifizierung in einem zweiten Schritt eine Information zur Verfolgung der Ware 4 oder des Warentransportbehälters 5. Wenn keine Identifizierung empfangen wurde, wird der erste Schritt im Beispiel wiederholt.

Zur Erkennung des Auf- oder Entladevorgangs wird vorzugsweise Richtungsinformation abhängig von mindestens zwei, vorzugsweise vier, ausgelesenen Identifizierungen derselben Ware 4 oder desselben Warentransportbehälters 5, ermittelt. Dazu werden die zwei, vorzugsweise vier, Identifizierungen zu unterschiedlichen Zeitpunkten ausgelesen. Dazu kann der Auslesevorgang von jeder Leseeinrichtung 2 periodisch oder in unregelmäßigen Abständen wiederholt werden, bis eine Antwort von einem Transponder 6 empfangen wird. Insbesondere werden die Zeitpunkte mit einem Abstand von bis zu 1 Minute, bis zu 30 Sekunden vorzugsweise bis zu 5 Sekunden voneinander gewählt. Dadurch wird eine Erkennung einer Bewegung der Ware 4 beziehungsweise des Warentransportbehälters 5 besser erkennbar.

Zwei einander gegenüberliegende Transponder 6 werden insbesondere bei der Verwendung von vier Transpondern 6 beispielsweise an ihrer Identifikation erkannt, die im Beispiel teilweise übereinstimmt. Bevorzugt werden gegenüberliegende Transponder 6 paarweise zur Ermittlung der Richtungsinformation verwendet.

Wenn zwei unterschiedliche Leseeinrichtungen 2 vorgesehen sind, wird vorzugsweise eine Identifizierung der Ware 4 oder des Warentransportbehälters 5 von unterschiedlichen Leseeinrichtungen 2 ausgelesen. Dadurch kann die Richtung zuverlässig erkannt werden.

Wenn an der Ladeöffnung 7 eine Hubladebühne 30 angeordnet ist, wird die mindesten eine Identifizierung zur Verfolgung der Ware 4 oder des Warentransportbehälters 5 vorzugsweise beim Fahren oder Bewegen der Ware 4 oder des Warentransportbehälters 5 auf die Hubladebühne 30 oder von der Hubladebühne 30 ausgelesen. Der Unterschied zwischen Auf- oder Entladen kann zusätzlich oder alternativ durch Erkennung der Position oder der Fahrtrichtung der Hubladebühne 30 beim Auslesen des Transponders 6 erkannt werden. Eine entsprechende Schnittstelle verbindet dabei die Leseeinrichtung 2 mit einer Hubladebühnensteuerung.

Vorzugsweise wird einer ausgelesenen Identifizierung Information zum Zeitpunkt und/oder Ort des Auslesens, insbesondere eine Uhrzeit und/oder GPS Koordinaten, zugeordnet. Die Verwendung von Information eines Fahrzeugnavigationssystems kann ebenfalls vorgesehen sein.

Dadurch wird Information zur Verfolgung der Ware 4 oder des Warentransportbehälters 5 erzeugt.

Vorzugsweise wird Information über die Uhrzeit und/oder die Position der Leseeinrichtung 2 empfangen. Als Position der Leseeinrichtung wird beispielsweise die Position des Lastkraftwagens 1 verwendet. Diese Information wird vorzugsweise zusammen mit Information über eine ausgelesene Identifizierung der Ware 4 oder des Warentransportbehälters 5, vorzugsweise mit einer den Lesezeitpunkt charakterisierenden Uhrzeit und/oder einer die Position der Leseeinrichtung zum Lesezeitpunkt charakterisierenden Information gespeichert.

Vorzugsweise wird Information über eine ausgelesene Identifizierung der Ware 4 oder des Warentransportbehälters 5, insbesondere nach deren Erzeugung, zusammen mit Information über die Uhrzeit und/oder die Position der Leseeinrichtung 2 zum Zeitpunkt des Auslesens, insbesondere über ein Funknetzwerk, gesendet. Dadurch ist die Warenverfolgung unabhängig von den logistischen Begebenheiten an der Entlade- oder Aufladestelle. Eine einfache automatische Warenverfolgung ist somit auch abseits von Lagern oder Logistikzentren möglich. Durch das automatisierte Auslesen wird zudem eine Fehlerquelle, die beispielsweise bei tragbaren Barcodescannern besteht, eliminiert. Dadurch wird die Warenverfolgung zuverlässiger.

## Patentansprüche

1. Lastkraftwagen (1) oder Hubladebühne (30) für einen Lastkraftwagen (1), **dadurch gekennzeichnet, dass** an dem Lastkraftwagen (1) oder an der Hubladebühne (30) für den Lastkraftwagen (1) mindestens eine Leseeinrichtung (2, 10) angeordnet ist, wobei die mindestens eine Leseeinrichtung (2, 10) so am Lastkraftwagen (1) beziehungsweise der Hubladebühne (30) angeordnet ist, dass beim Verladen eines Guts (4, 5) eine Identifizierung des Guts (4, 5) mittels eines von der Leseeinrichtung (2, 10) empfangbaren elektromagnetischen Signals aus mindestens einem am Gut (4, 5) angebrachten Transponder (6) auslesbar ist.

2. Vorrichtung nach Anspruch 1, **dadurch gekennzeichnet, dass** die mindestens eine Leseeinrichtung (2, 10) ausgebildet ist, zur Verfolgung des Guts (4, 5) Richtungsinformation abhängig von mindestens zwei ausgelesenen Identifizierungen desselben Guts (4, 5) zu erkennen.

3. Vorrichtung nach Anspruch 2, **dadurch gekennzeichnet, dass** die Leseeinrichtung (2, 10) ausgebildet ist, die mindestens zwei Identifizierungen desselben Guts (4, 5) zu unterschiedlichen Zeitpunkten auszulesen, oder dass mindestens zwei miteinander in Kommunikation stehende Leseeinrichtungen (2, 10) vorgesehen sind, die ausgebildet sind, eine Identifizierungen desselben Guts (4, 5) auszulesen.

4. Vorrichtung nach einem der vorherigen Ansprüche, **dadurch gekennzeichnet, dass** die Hubladebühne (30) an der Ladeöffnung (7) angeordnet ist, und dass die mindestens eine Leseeinrichtung (2, 10) an einer der Ladeöffnung (7) zugewandten Tragseite der Hubladbühne (30) angeordnet ist.

5. Vorrichtung nach Anspruch 4, **dadurch gekennzeichnet, dass** die mindestens eine Leseeinrichtung (2, 10) in einem Randbereich der Hubladebühne (30) angeordnet ist, oder dass die mindestens eine Leseeinrichtung (2, 10) in einem inneren Bereich der Hubladebühne (30) angeordnet ist, oder dass die mindestens eine Leseeinrichtung (2, 10) eben mit der Tragseite der Hubladebühne (30) abschließend oder von der Tragseite der Hubladebühne (30) in Richtung Ladeöffnung (7) abstehend angeordnet ist, oder dass die Leseeinrichtung (2, 10) ausgebildet ist, die mindesten eine Identifizierung zur Verfolgung des Guts (4, 5) beim Bewegen des Guts (4, 5) auf die, von der oder auf der Hubladebühne (30) auszulesen.

6. Vorrichtung nach einem der Ansprüche 1 bis 4, **dadurch gekennzeichnet, dass** die mindestens eine Leseeinrichtung (2) der Ladeöffnung (7) zugewandt am Aufbau (3) des Lastkraftwagens (1) angeordnet ist.

7. Vorrichtung nach Anspruch 5, **dadurch gekennzeichnet, dass** die mindestens eine Leseeinrichtung (2, 10) in einem die Ladeöffnung begrenzenden Randbereich des Aufbaus (3) angeordnet ist.

8. Vorrichtung nach einem der Ansprüche 6 oder 7, **dadurch gekennzeichnet, dass** die mindestens eine Leseeinrichtung (2, 10) eben mit einem der Ladeöffnung (7) zugewandten Abschnitt des Aufbaus (3) abschließend angeordnet ist.

9. Vorrichtung nach einem der Ansprüche 6 bis 8, **dadurch gekennzeichnet, dass** die mindestens eine Leseeinrichtung (2, 10) von einem der Ladeöffnung (7) zugewandten Abschnitt des Aufbaus (3) aus, in Richtung Ladeöffnung (7) abstehend angeordnet ist.

10. Vorrichtung nach einem der vorherigen Ansprüche, **dadurch gekennzeichnet, dass** die mindestens eine Leseeinrichtung (2, 10) ausgebildet ist einer ausgelesenen Identifizierung Information zum Zeitpunkt und/oder Ort des Auslesens, insbesondere eine Uhrzeit und/oder GPS Koordinaten, zuzuordnen.

11. Vorrichtung nach Anspruch 5, **dadurch gekennzeichnet, dass** die mindestens eine Leseeinrichtung (2, 10) eine Kommunikationsschnittstelle umfasst, die ausgebildet ist Information über die Uhrzeit und/oder die Position der Leseeinrichtung zu empfangen.

12. Vorrichtung nach einem der vorherigen Ansprüche, **dadurch gekennzeichnet, dass** ein Speicher in der mindestens einen Leseeinrichtung (2, 10), der Hubladebühne (30) oder in dem Lastkraftwagen (1) vorgesehen ist, und dass Information über eine ausgelesene Identifizierung, vorzugsweise mit einer den Lesezeitpunkt charakterisierenden Uhrzeit und/oder einer die Position der Leseeinrichtung (2) zum Lesezeitpunkt charakterisierenden Information in dem Speicher gespeichert wird.

13. Vorrichtung nach einem der vorherigen Ansprüche, **dadurch gekennzeichnet, dass** in der mindestens einen Leseeinrichtung (2, 10) ein Sender oder in dem Lastkraftwagen (1) ein mit der mindestens einen Leseeinrichtung (2, 10) verbundener Sender angeordnet ist, der ausgebildet ist Information über eine ausgelesene Identifizierung, die Uhrzeit und/oder die Position der mindestens einen Leseeinrichtung (2, 10) zu senden.

14. Vorrichtung nach einem der vorherigen Ansprüche, **dadurch gekennzeichnet, dass** die mindestens eine Leseeinrichtung (2, 10) auf der Ladeöffnung (7) zugewandter Seite eine Abdeckung aufweist, die für das elektromagnetische Signal zumindest teilweise durchlässig ist.

15. Vorrichtung nach einem der vorherigen Ansprüche, **dadurch gekennzeichnet, dass** an der mindestens einen Leseeinrichtung (2, 10) auf der Ladeöffnung (7) abgewandter Seite eine Abschirmeinrichtung (21, 32) angeordnet ist, die die Ausbreitung des elektromagnetischen Signals dämpft.

16. Vorrichtung nach Anspruch 15, wobei zumindest ein Teil der Hubladebühne (30) zumindest einen Teil der Abschirmeinrichtung (32) bildet.

17. Vorrichtung nach Anspruch 15 oder 16, wobei zumindest ein Teil des Aufbaus (3) zumindest einen Teil der Abschirmeinrichtung (21) bildet.

18. Verfahren zum Verladen eines Guts (4, 5), **dadurch gekennzeichnet, dass** an einem Lastkraftwagen (1) oder an einer Hubladebühne (30) für einen Lastkraftwagen (1) mindestens eine Leseeinrichtung (2, 10) angeordnet wird, und wobei die mindestens eine Leseeinrichtung (2, 10) beim Verladen des Guts (4, 5) eine Identifizierung des Guts (4, 5) mittels eines von der Leseeinrichtung (2, 10) empfangenen elektromagnetischen Signals aus mindestens einem am Gut (4, 5) angebrachten Transponder (6) ausliest.

19. Verfahren nach Anspruch 18, **dadurch gekennzeichnet, dass** zur Verfolgung des Guts (4, 5) Richtungsinformation, abhängig von mindestens zwei ausgelesenen Identifizierungen desselben Guts (4, 5) erkannt wird.

20. Verfahren nach Anspruch 19, **dadurch gekennzeichnet, dass** mindestens zwei Identifizierungen desselben Guts (4, 5) zu unterschiedlichen Zeitpunkten ausgelesen werden, oder dass die mindestens zwei Identifizierungen desselben Guts (4, 5) von unterschiedlichen Leseeinrichtungen (2, 10) ausgelesen werden.

21. Verfahren nach einem der Ansprüche 18 bis 20, **dadurch gekennzeichnet, dass** an der Ladeöffnung (7) eine Hubladebühne (30) angeordnet wird, und die mindesten eine Identifizierung zur Verfolgung des Guts (4, 5) beim Bewegen des Guts (4, 5) auf die, von der oder auf der Hubladebühne (30) ausgelesen wird, oder
dass einer ausgelesenen Identifizierung Information zum Zeitpunkt und/oder Ort des Auslesens, insbesondere eine Uhrzeit und/oder GPS Koordinaten, zugeordnet wird, oder
dass Information über die Uhrzeit und/oder die Position der Leseeinrichtung (2, 10) empfangen wird, wobei Information über eine ausgelesene Identifizierung mit einer den Lesezeitpunkt charakterisierenden Uhrzeit und/oder einer die Position der Leseeinrichtung (2, 10) zum Lesezeitpunkt charakterisierenden Information gespeichert wird, oder
dass Information über eine ausgelesene Identifizierung, die Uhrzeit und/oder die Position der Leseeinrichtung (2, 10) gesendet werden.
